# EUROPEAN PATENT APPLICATION

(11) **EP 2 636 873 A2**
(43) Date of publication of application: **11.09.2013**
(21) Application number: 13158056.5
(22) Date of filing: 06.03.2013
(51) Int. Cl.: F02C 7/32, F02C 7/36

(54) **Apparatus for extracting input power from the low pressure spool of a turbine engine**

(30) Priority: 07.03.2012 US 201213414065
(71) Applicant: GE Aviation Systems LLC, Grand Rapids, MI 49512-1991 (US)
(72) Inventor: Huang, Hao, Vandalia, OH Ohio 45377 (US)
(74) Representative: Williams, Andrew Richard

(57) **Abstract**

An apparatus for powering an aircraft by generating power from a pressure spool (26,28) of a turbine engine (10) includes a speed range reduction assembly (74,740) that reduces the higher speed ranges of a low pressure spool (28) to lower speed ranges within the tolerances of the same DC or VF generators (58,580) used with the high pressure spool (26).

## Description

Turbine engines, and particularly gas turbine engines, also known as combustion turbine engines, are rotary engines that extract energy from a flow of combusted gases passing through the engine onto a multitude of turbine blades. Gas turbine engines have been used for land and nautical locomotion and power generation, but are most commonly used for aeronautical applications such as for airplanes, including helicopters. In airplanes, gas turbine engines are used for propulsion of the aircraft.

Gas turbine engines can have two or more spools, including a low pressure (LP) spool that provides a significant fraction of the overall propulsion system thrust, and a high pressure (HP) spool that drives one or more compressors and produces additional thrust by directing exhaust products in an aft direction. A triple spool gas turbine engine includes a third, intermediate pressure (IP) spool.

Gas turbine engines also usually power a number of different accessories such as generators, starter/generators, permanent magnet alternators (PMA), fuel pumps, and hydraulic pumps, e.g., equipment for functions needed on an aircraft other than propulsion. For example, contemporary aircraft need electrical power for avionics, motors, and other electric equipment. A generator coupled with a gas turbine engine will convert the mechanical power of the engine into electrical energy needed to power accessories.

It is known to use DC generators and variable frequency (VF) generators for extracting power from high pressure spools of gas turbine engines. But heretofore it has not been feasible to use such generators to extract power from low pressure spools because of the wild speed ranges of low pressure spools, which at the high end exceeds the acceptable speed tolerances of DC and VF generators.

A power generation system for extracting power from a low pressure (LP) spool of a turbine engine includes a DC or variable frequency generator, an LP drive assembly, and a control mechanism. The LP drive assembly has an input mechanically coupled to the LP spool and an output mechanically coupled to the generator. The control mechanism has a controller with a matrix of tabular commands that map the input to a desired output so that the desired output is a speed range that is lower than a speed range of the input.

In the drawings:
FIG. 1 is a schematic cross-sectional diagram of a gas turbine engine for an aircraft.
FIG. 2 is a schematic block diagram of a first embodiment of an electrical power generation system for the gas turbine engine of FIG. 1 using a variable frequency generator.
FIG. 3 is a schematic block diagram of a second embodiment of an electrical power generation system for the gas turbine engine of FIG. 1 using a DC generator.
FIG. 4 is a schematic diagram of a mechanism for speed range reduction in the embodiments of FIGS. 2 and 3.
FIG. 5 is an exemplary chart showing a relationship for mapping output speeds in the in the embodiments of FIGS. 2 and 3.

The described embodiments of the present invention are directed to power extraction from an aircraft engine, and more particularly to an electrical power system architecture which enables production of electrical power from a turbine engine, preferably a gas turbine engine. It will be understood, however, that the invention is not so limited and has general application to electrical power system architectures in non-aircraft applications, such as other mobile applications and non-mobile industrial, commercial, and residential applications.

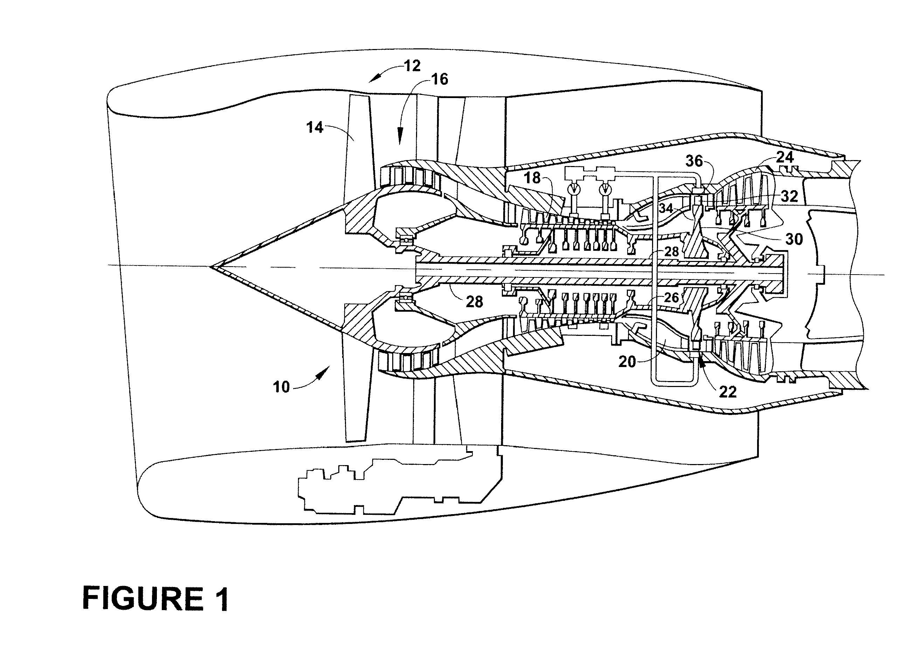

FIG. 1 is a schematic cross-sectional diagram of a gas turbine engine 10 for an aircraft. Engine 10 includes, in downstream serial flow relationship, a fan section 12 including a fan 14, a booster or low pressure (LP) compressor 16, a high pressure (HP) compressor 18, a combustion section 20, a HP turbine 22, and a LP turbine 24. A HP shaft or spool 26 drivingly connects HP turbine 22 to HP compressor 18 and a LP shaft or spool 28 drivingly connects LP turbine 24 to LP compressor 16 and fan 14. HP turbine 22 includes an HP turbine rotor 30 having turbine blades 32 mounted at a periphery of rotor 30. Blades 32 extend radially outwardly from blade platforms 34 to radially outer blade tips 36.

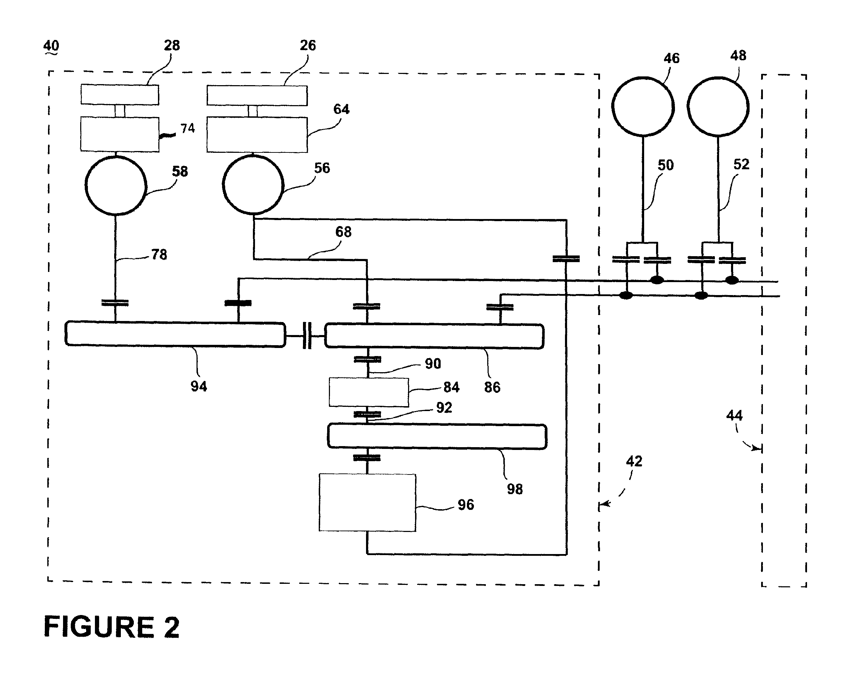

FIG. 2 is a schematic block diagram of an electrical power system architecture 40 according to a first embodiment of the invention. The system architecture 40 includes multiple engine systems, shown herein as including at least a left engine system 42 and a right engine system 44. The left and right engine systems 42, 44 may be substantially identical; therefore, only the left engine system 42 will be described in detail for the sake of brevity. The left engine system 42 can include the HP and LP spools 26, 28 of the gas turbine engine 10 shown in FIG. 1, although the system architecture 40 has application to other engines as well. The left engine system 42 shown herein uses mechanical power provided by two spools, the HP spool 26 and the LP spool 28. However, the system architecture 40 could also be implemented on an engine having more than two spools, such as a 3-spool engine having an intermediate pressure spool in addition to the HP and LP spools. The system architecture 40 can further include an auxiliary power unit (APU) 46 of the aircraft and an external power source (EPS) 48. As shown herein, the APU 46 and EPS 48 each have a DC output 50, 52, respectively.

In the embodiment illustrated, the left engine system 42 includes a first variable frequency starter generator 56, configured to produce variable frequency (VF) AC power from mechanical power supplied by the HP spool 26, and a second variable frequency generator 58 configured to produce variable frequency (VF) AC power from mechanical power supplied by the LP spool 28.

The HP spool 26 can be operably coupled with the first variable frequency starter generator 56 by an HP drive assembly having an input mechanically coupled to the HP spool 26 and an output mechanically coupled to the first variable frequency starter generator 56. One embodiment of the HP drive assembly is an accessory gearbox 64, where the first variable frequency starter generator 56 can be mounted and coupled to the accessory gearbox 64. Within the accessory gearbox 64, power may also be transferred to other engine accessories. The first variable frequency starter generator 56 converts mechanical power supplied by the HP spool 26 into electrical power.

The first variable frequency starter generator 56 can also provide a starting function to the aircraft wherein it functions a motor to start the engine 10. Alternatively, the first variable frequency starter generator 56 on the HP side of the left engine system 42 may not necessarily provide a starting function to the aircraft. In such case, a separate starter motor connected to the accessory gearbox 64 can be provided to perform the starting function for the aircraft. Furthermore, the left engine system 42 may include multiple generators drawing mechanical power from the HP spool 26 to produce power in order to provide a measure of redundancy.

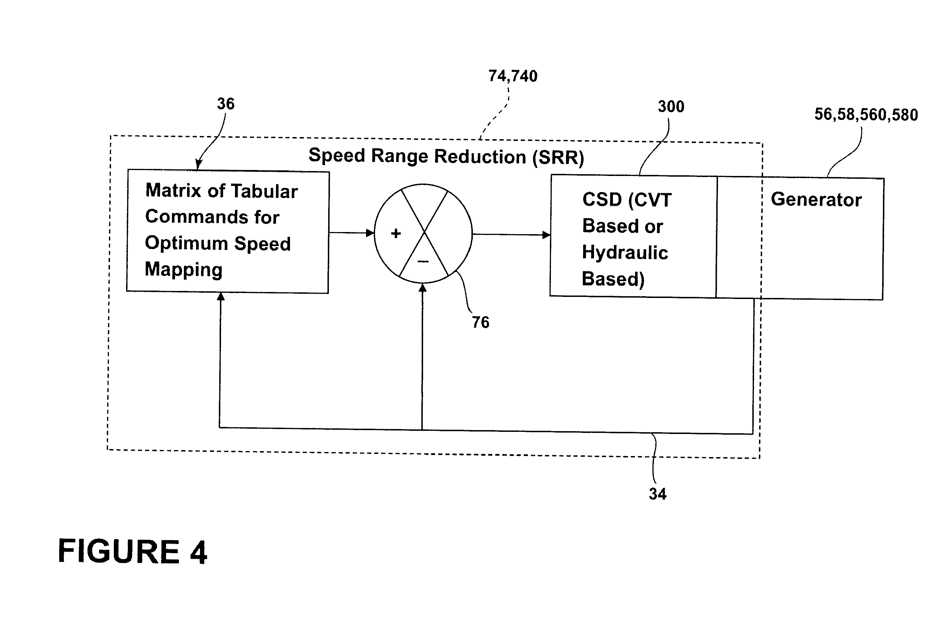

The second variable frequency generator 58 may be identical to the first variable frequency starter generator 56, but for the starting function. In this situation, however, because of the fluctuating speed ranges of the LP spool 28, the LP spool 28 is operably coupled with the first variable frequency starter generator 56 by speed range reduction assembly 74 having an input mechanically coupled to the LP spool 28 and an output mechanically coupled to the second variable frequency generator 58. One embodiment of the speed range reduction assembly includes a controller 76 (see Fig. 4) that reduces the range of the variable speed input from the LP spool 28 to a range within the tolerances of the second variable frequency generator 58. The first variable frequency starter generator 56 converts mechanical power supplied by the HP spool 26 into VF electrical power output.

Although the embodiment shown herein is described as using one second variable frequency generator 58 on the LP side of the left engine system 42, another embodiment of the invention may use multiple second variable frequency generators 58 drawing mechanical power from the LP spool 28 to produce AC power in order to provide a measure of redundancy. Furthermore, while a separate second variable frequency generator 58 and speed range reduction assembly 74 are discussed herein, an integrated drive generator which combines the speed range reduction assembly 74 and the second variable frequency generator 58 into a common unit can alternatively be used.

Power output 68 from the first variable frequency starter generator 56 is supplied to a first electrical AC bus 86. Similarly, power output 78 from the second variable frequency generator 58 is supplied to a second electrical AC bus 94. Some AC power 90 is drawn from the first electrical AC bus 86 to an AC/DC converter 84 for converting the AC power output 90 to a DC power output 92 which is fed to an electrical DC bus 98.

A motor-starter controller 96 can selectively provide power from the electrical DC bus 98 to the first variable frequency starter generator 56 to initiate a starting procedure for the aircraft. The motor-starter controller 96 can be integrated with the first variable frequency starter generator 56 for engine starting by connecting the motor-starter controller 96 to first variable frequency starter generator 56 as shown FIG. 2.

The first and second electrical buses 86, 94 are configured to supply AC power to one or more loads (not shown) that require a AC power supply. The first and second electrical buses 86, 94 can be selectively connected to enable loads to be shared by the HP spool 26 and the LP spool 28.

In operation, with the gas turbine engine 10 started, HP turbine 22 rotates the HP spool 26 and the LP turbine 24 rotates the LP spool. The accessory gearbox 64 is driven by the rotating HP spool 26, and transmits mechanical power from the HP spool 26 to the first variable frequency starter generator 56. The first variable frequency starter generator 56 converts mechanical power supplied by the HP spool 26 into electrical power and produces the AC power output 68. The speed range reduction assembly 74 is driven by the rotating LP spool 28, and transmits mechanical power from the LP spool 28 to the second variable frequency generator 58. The second variable frequency generator 58 converts the mechanical power supplied by the LP spool 28 into electrical power and produces the AC power output 78. The power outputs 68, 78 can be respectively provided to the electrical AC buses 86, 94 configured to supply AC power to one or more loads (not shown) that require a AC power supply. Depending on the type of load drawing power, the AC power extracted by the system architecture 40 may undergo further processing before being used by the loads. The DC power outputs 50, 52 of the APU 44 and the EPS 48, if converted, can also be provided to the electrical AC buses 86, 94.

The left and right engine systems 42, 44, APU 46 and EPS 48 can provide DC power to various loads of the aircraft as needed. The various DC outputs of the left engine system 42, the right engine system 44, the APU 46, and the EPS 48 are preferably integrated with appropriate switches to provide no break power transfer (NBPT) to the aircraft.

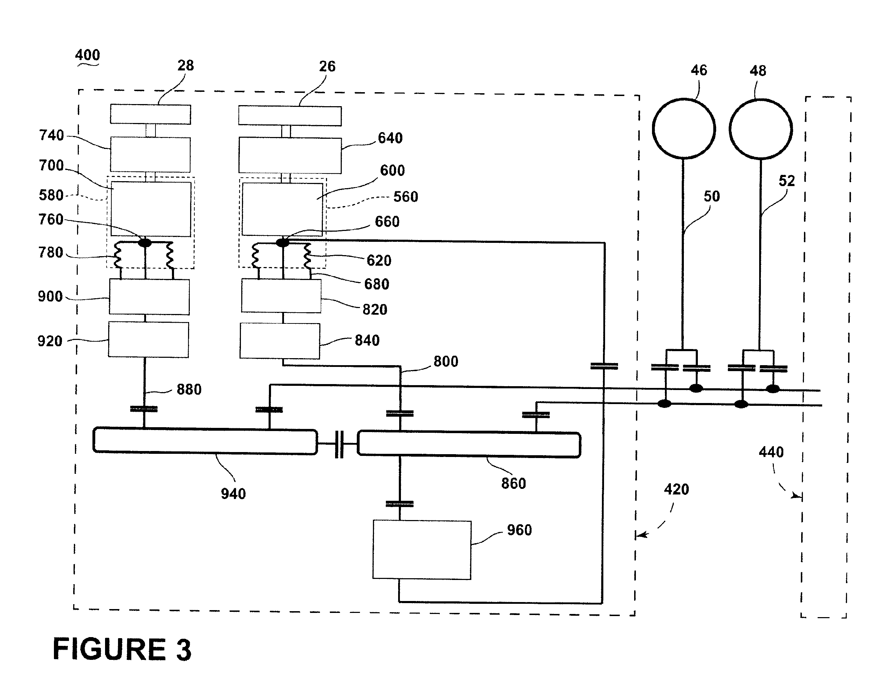

FIG. 3 is a schematic block diagram of an electrical power system architecture 400 according to a second embodiment of the invention. The system architecture 400 includes multiple engine systems, shown herein as including at least a left engine system 420 and a right engine system 440. The left and right engine systems 420, 440 may be substantially identical; therefore, only the left engine system 420 will be described in detail for the sake of brevity. The left engine system 420 can include the HP and LP spools 26, 28 of the gas turbine engine 10 shown in FIG. 1, although the system architecture 400 has application to other engines as well. The left engine system 420 shown herein uses mechanical power provided by two spools, the HP spool 26 and the LP spool 28. However, the system architecture 400 could also be implemented on an engine having more than two spools, such as a 3-spool engine having an intermediate pressure spool in addition to the HP and LP spools. The system architecture 40 can further include an auxiliary power unit (APU) 46 of the aircraft and an external power source (EPS) 48. As shown herein, the APU 46 and EPS 48 each have a DC output 50, 52, respectively.

In the embodiment illustrated, the left engine system 420 includes a first autotransformer unit (ATU) integrated generator 560, shown herein as a first variable frequency starter generator 560, configured to produce variable frequency (VF) AC power from mechanical power supplied by the HP spool 26, and a second ATU integrated generator 580 configured to produce variable frequency (VF) AC power from mechanical power supplied by the LP spool 28.

The first variable frequency starter generator 560 includes a power generation section 600 and an ATU section 620. The ATU section 620 may be integrated with the power generation section 600 by integrating some of the electrical windings necessary for power transformation on the electrical winding of the power generation section 600 which can effectively eliminate winding duplication in the power generation section 600 and the ATU section 620, and can translate into weight and cost savings for the aircraft.

The HP spool 26 can be operably coupled with the first variable frequency starter generator 560 by an HP drive assembly having an input mechanically coupled to the HP spool 26 and an output mechanically coupled to the power generation section 620. One embodiment of the HP drive assembly is an accessory gearbox 640, where the first variable frequency starter generator 560 can be mounted and coupled to the accessory gearbox 640. Within the accessory gearbox 640, power may also be transferred to other engine accessories. The power generation section 600 of the first variable frequency starter generator 560 converts mechanical power supplied by the HP spool 26 into electrical power and produces a power supply 660 having three phase outputs. The ATU section 620 of the first variable frequency starter generator 560 functions to both transform the three phase outputs of the power supply 660 into a nine phase power output 680 and to step up the voltage of the power supply.

The first variable frequency starter generator 560 also provides a starting function to the aircraft. Alternatively, the first variable frequency starter generator 560 on the HP side of the left engine system 420 may comprise a generator that does not provide a starting function to the aircraft. In this case, a separate starter motor connected to the accessory gearbox 600 can be provided to perform the starting function for the aircraft. Furthermore, the left engine system 420 can include multiple generators drawing mechanical power from the HP spool 26 to produce power in order to provide a measure of redundancy.

The second variable frequency generator 580 includes a power generation section 700 and an ATU section 720. The LP spool 28 can be operably coupled with the second variable frequency generator 580 by an LP drive assembly having an input mechanically coupled to the LP spool 28 and an output mechanically coupled to the power generation section 700. One embodiment of the speed range reduction assembly 740 includes a controller that reduces the range of the variable speed input from the LP spool 28 to a range within the tolerances of the second variable frequency generator 58. As shown herein, the speed range reduction assembly 740 can be mechanically coupled to the second variable frequency generator 58 and drives the power generation section 700 at a variable speed different than the input speed. The power generation section 700 of the second variable frequency generator 58 converts mechanical power supplied by the LP spool 28 into electrical power and produces a power supply 760 having three phase outputs. The ATU section 720 of the second variable frequency generator 58 functions to both transform the three phase outputs of the power supply 760 into a nine phase power output 780 and to step up the voltage of the power supply.

Although the embodiment shown herein is described as using one second variable frequency generator 580 on the LP side of the left engine system 42, another embodiment of the invention may use multiple second variable frequency generators 58 drawing mechanical power from the LP spool 28 to produce AC power in order to provide a measure of redundancy. Furthermore, while a separate second variable frequency generator 58 and speed range reduction assembly 740 are discussed herein, an integrated drive generator which combines the speed range reduction assembly 740 and second variable frequency generator 58 into a common unit can alternatively be used.

The power output 680 from the integrated first variable frequency starter generator 560 is supplied to a first AC/DC converter for converting the AC power output 680 to a DC power output 800. As illustrated, the first AC/DC converter can include a first rectifier device 820 and a first filter 840 for converting the AC voltage to DC voltage and for evening out the current flow before being supplied to a first electrical DC bus 860. Similarly, the power output 780 from the second variable frequency generator 580 is supplied to a second AC/DC converter for converting the AC power output 780 to a DC power output 880. As illustrated, the second AC/DC converter can include a second rectifier device 900 and a second filter 920 for converting the AC voltage to DC voltage and for evening out the current flow before being supplied to a second electrical DC bus 940.

A motor-starter controller 960 can selectively provide power from the first electrical bus 860 to the first variable frequency starter generator 560 to initiate a starting procedure for the aircraft. The motor-starter controller 960 can be integrated with the first variable frequency starter generator 560 for engine starting by connecting the motor-starter controller 960 to the specific location of the first variable frequency starter generator 560 as shown FIG. 3. The three phase motor-starter controller 960 is connected to the three phase power supply 660 to drive the first variable frequency starter generator 560 as a three phase starter for engine starting.

The first and second electrical buses 860, 940 are configured to supply DC power to one or more loads (not shown) that require a DC power supply. The first and second electrical buses 860, 940 can be selectively connected to enable loads to be shared by the HP spool 26 and the LP spool 28.

In operation, with the gas turbine engine 10 stared, HP turbine 22 rotates the HP spool 26 and the LP turbine 24 rotates the LP spool. The accessory gearbox 640 is driven by the rotating HP spool 26, and transmits mechanical power from the HP spool 26 to the first variable frequency starter generator 560. The first variable frequency starter generator 560 converts mechanical power supplied by the HP spool 26 into electrical power and produces the DC power output 800. The speed range reduction assembly 740 is driven by the rotating LP spool 28, and transmits mechanical power from the LP spool 28 to the second variable frequency generator 580. The second variable frequency generator 580 converts the mechanical power supplied by the LP spool 28 into electrical power and produces the DC power output 880. The power outputs 800, 880 can be respectively provided to the electrical buses 860, 940 configured to supply DC power to one or more loads (not shown) that require a DC power supply. Depending on the type of load drawing power, the DC power extracted by the system architecture 400 may undergo further processing before being used by the loads. The DC power outputs 50, 52 of the APU 44 and the EPS 48 can also be provided to the electrical buses 860, 940.

The left and right engine systems 42, 44, APU 46 and EPS 48 can provide DC power to various loads of the aircraft as needed. The various DC outputs of the left engine system 42, the right engine system 44, the APU 46, and the EPS 48 are integrated with appropriate switches to provide no break power transfer (NBPT) to the aircraft.

FIG. 4 is a schematic diagram of the speed range reduction assembly 74, 740. The speed range reduction assembly 74, 740 comprises a conventional constant speed drive (CSD) 300 which may be based on a continuously variable transmission or a hydraulic system. As mentioned above, the CSD 300 may be coupled to the output of the LP spool 28, and integrated with or otherwise coupled to a variable frequency generator 56, 58, 560, 580, and to a controller 32. The controller 32 is configured to receive feedback signals 34 from the variable frequency generator 56, 58, 560, 580, and process them with an algorithm of tabular commands 36 to alter the speed of the CSD 300 and the consequent input to the variable frequency generator 56, 58, 560, 580.

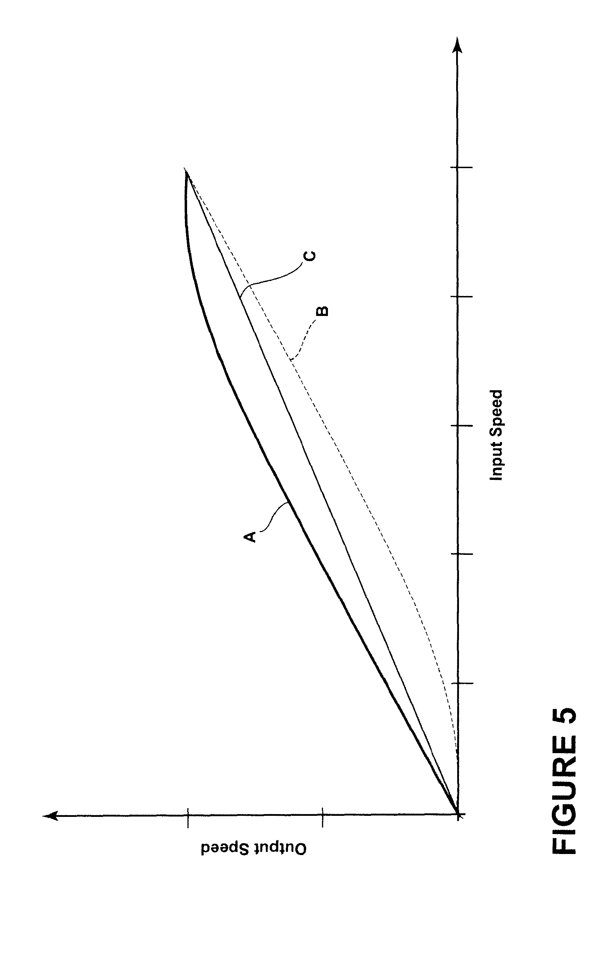

Fig. 5 illustrates graphically how the output speeds of the CSD 300 are determined by the controller 76. Plot A is an empirically determined curve showing an exemplary relationship between input speeds from the LP spool 28 and output speeds from the CSD 300 for a variable frequency generator having high efficiencies at high speeds. Plot B is an empirically determined curve showing an exemplary relationship between input speeds from the LP spool 28 and output speeds from the CSD 300 for a variable frequency generator having high efficiencies at low speeds. And Plot C is an empirically determined curve showing an exemplary purely proportional relationship between input speeds from the LP spool 28 and output speeds from the CSD 300 for a variable frequency generator. Actual values for the curves depend on many factors, including the specifications of particular generators, and they can be determined empirically and/or by testing or virtual modeling. Exemplary speed ranges of LP spool may be 4:1 or 5:1, and they can be reduced to 2:1, which is an exemplary range of the same proximity for a standard VF generator.

In operation, the controller 32 applies the algorithm of the curve correlating to a given generator to reduce the speed range of the output of the CSD 300 from the higher speed range of the input from the LP spool 28. As the LP spool 28 rotates, the controller 32 continuously receives signals from the input to the CSD 300 and maps the output speed of the CSD 300 to the input speed based on the algorithm. The algorithm may be implemented by the controller 76 using tabular commands extracted from the selected curve. Ideally, the mapping can be optimized for the most efficient operation of the generator.

One advantage that may be realized in the practice of some embodiments of the system architecture disclosed herein is that DC and VF generators that are readily available for extracting power from HP spools can now be operated with LP spools, thereby saving significant cost in separate development and sourcing for generators that are readily available for extracting power from LP spools.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A power generation system (40) for extracting power from a low pressure (LP) spool (28) of a turbine engine (10) comprising:
a generator (58);
an LP drive assembly (74) having an input mechanically coupled to the LP spool (28) and an output mechanically coupled to the generator (58); and
a control mechanism having a controller (76) with a matrix of tabular commands (36) that map the input to a desired output wherein the desired output is a speed range that is lower than a speed range of the input.

2. The power generation system (40) of claim 1, wherein the generator (58) comprises a variable frequency generator.

3. The power generation system (40) of either of claim 1 or 2, wherein the generator comprises a DC generator.

4. The power generation system (40) of any of the preceding claims, wherein the speed range of the input is incompatible with the generator (58), and the speed range of the output is compatible with the generator (58).

5. The power generation system (40) of any of the preceding claims, wherein the speed range of the input is 4:1 to 5:1, and the speed range of the output is 2:1.

6. The power generation system (40) of any of the preceding claims, wherein the turbine engine (10) has a high pressure (HP) spool (26) having an HP speed range, and the speed range of the output is the same as the HP speed range.

7. The power generation system (40) of any of the preceding claims, wherein the mapping is proportional.

8. The power generation system (40) of any of the preceding claims, wherein the mapping is optimized for the most efficient operation of the generator (58).
